# EUROPEAN PATENT APPLICATION

(11) **EP 4 197 888 A1**
(43) Date of publication of application: **21.06.2023**
(21) Application number: 22208776.9
(22) Date of filing: 22.11.2022
(51) Int. Cl.: B62D 25/08, B62D 29/00

(54) **FRONT BODY, VEHICLE, AND BODY CONNECTION STRUCTURE**

(30) Priority: 16.12.2021 CN 202111545387
(71) Applicant: Guangzhou Xiaopeng Motors Technology Co., Ltd., Tianhe District Guangzhou Guangdong (CN)
(72) Inventor: YANG, Yang, Guangzhou (CN); XUE, Ming, Guangzhou (CN); ZHANG, Jiaxun, Guangzhou (CN); XIANG, Ping, Guangzhou (CN); LI, Juncai, Guangzhou (CN)
(74) Representative: Ran, Handong

(57) **Abstract**

A front body (10), a vehicle (1000), and a body connection structure (100) are provided. The front body (10) is used for a vehicle and includes: a front longitudinal beam (11), a transverse beam (12) connected with the front longitudinal beam, a shock tower (13) disposed above the front longitudinal beam, and an upper end beam (14) connected with the shock tower and the front longitudinal beam. The front longitudinal beam (11) , the transverse beam (12), the shock tower (13), and the upper end beam (14) are in a one-piece casting structure. In the front body (10), the vehicle (1000), and the body connection structure (100), the formation into a one-piece casting structure enables the front body to be more coherent, by way of which crash forces can be well transferred on the front body. Anti-crash performance of the front body is thus improved, and meanwhile intrusion into a front end of the vehicle can be decreased to reduce damage to occupants in the vehicle.

(Figure 1)

## Description

### Field of the Invention

The present disclosure relates to the field of automobile design and manufacturing, and in particular to a front body, a vehicle, and a body connection structure.

### Background

A front engine bay frame structure is an important part of a body framework of a vehicle. This structure, while housing various components in a front engine bay, also plays role in absorbing energy, transferring energy, and providing sufficient stiffness for the body framework in a crash. In related technologies, the front body is generally formed by welding together dozens of components such as a front longitudinal beam, a shock tower, a front panel, a transverse beam, etc. The front body formed in this way is structurally complex and unable to well transfer crash forces, and can result in great intrusion into the front part of the vehicle and thus great damage to occupants.

### Summary

Embodiments of the present disclosure provide a front body, a vehicle, and a body connection structure.

The front body provided in the embodiments of the present disclosure is used for a vehicle. The front body includes a front longitudinal beam, a transverse beam, a shock tower, and an upper end beam. The transverse beam is connected with the front longitudinal beam. The shock tower is disposed above the front longitudinal beam. The upper end beam is connected with the shock tower and the front longitudinal beam. The front longitudinal beam, the transverse beam, the shock tower, and the upper end beam are in a one-piece casting structure.

In some embodiments, the front longitudinal beam has a plurality of first mounting holes for mounting a subframe.

In some embodiments, the front body further includes a base plate connected with the front longitudinal beam. The base plate has a plurality of second mounting holes for mounting a battery pack.

In some embodiments, a third mounting hole is formed at a junction of the front longitudinal beam and the base plate. The third mounting hole is used for mounting a steering column.

In some embodiments, the front body further includes a plurality of ribs. The ribs are interlaced on the base plate.

In some embodiments, the front body further includes an energy-absorbing region and a load-bearing region connected with the energy-absorbing region. The energy-absorbing region is provided thereon with an energy-absorbing member.

In some embodiments, the shock tower has an assembly hole formed in a side thereof away from the front longitudinal beam. The assembly hole is used for mounting a shock absorber.

In some embodiments, the upper end beam has a notch formed at an edge thereof away from the front longitudinal beam.

In some embodiments, the transverse beam is provided thereon with a reinforcing rib.

The vehicle provided in the embodiments of the present disclosure includes the front body according to any of the above embodiments and a vehicle body connected with the front body.

The body connection structure provided in the embodiments of the present disclosure is used for a vehicle. The body connection structure includes a front body, an A-pillar, and a door sill. The front body is a one-piece casting structure. The A-pillar is connected with a lower portion of the front body via a first fastener, an axis direction of the first fastener extending along a length direction of the vehicle. The door sill is connected with the lower portion of the front body, an end portion of the door sill being arranged to overlap the lower portion of the front body along a width direction of the vehicle.

In some embodiments, the lower portion of the front body wraps at least a part of the end portion of the door sill.

In some embodiments, the A-pillar is connected with an upper portion of the front body via a second fastener. An axis of the second fastener extends along the width direction of the vehicle.

In some embodiments, a root portion of the front body is connected with an inner side of the door sill via a third fastener. The lower portion of the front body includes the root portion of the front body.

In some embodiments, the A-pillar and the root portion of the front body are connected via the first fastener, and the lower portion of the front body includes the root portion of the front body.

In some embodiments, provided are two A-pillars, each of the A-pillars facing an inner side of the other A-pillar. The front body is sandwiched between the two A-pillars.

In some embodiments, the front body is connected with the inner sides of the A-pillars via a fourth fastener. An axis of the fourth fastener extends along the width direction of the vehicle.

In the front body, the vehicle, and the body connection structure of the embodiments of the present disclosure, formation of the front body into a one-piece by casting enables the front body to be more coherent, as a consequence of which crash forces can be well transferred on the front body. Anti-crash performance of the front body is thus improved, and meanwhile intrusion into a front end of the vehicle can be decreased to reduce damage to occupants in the vehicle.

Additional aspects and advantages of the present disclosure will be given in the following description, and some of them will become evident from the following description or become understandable from the practice of the present disclosure.

### Brief Description of the Drawings

The above and/or additional aspects and advantages of the present disclosure will become evident and readily understandable from the description of the embodiments with reference to the accompanying drawings below, in which:
Fig. 1 is a schematic structural diagram of a front body provided in the embodiments of the present disclosure;
Fig. 2 is a partial bottom view of the front body provided in the embodiments of the present disclosure;
Fig. 3 is a plan view of a vehicle provided in the embodiments of the present disclosure;
Fig. 4 is a side view of the front body provided in the embodiments of the present disclosure;
Fig. 5 is a schematic structural diagram of the front body provided in the embodiments of the present disclosure from another perspective;
Fig. 6 is an enlarged view of a part of the front body provided in the embodiments of the present disclosure;
Fig. 7 is a bottom view of the front body provided in the embodiments of the present disclosure;
Fig. 8 is another partial bottom view of the front body provided in the embodiments of the present disclosure;
Fig. 9 is a partial side view of the front body provided in the embodiments of the present disclosure;
Fig. 10 is another schematic structural diagram of the front body provided in the embodiments of the present disclosure;
Fig. 11 is a schematic structural diagram of a body connection structure provided in the embodiments of the present disclosure;
Fig. 12 is a schematic diagram of a part of the body connection structure provided in the embodiments of the present disclosure;
Fig. 13 is a schematic structural diagram of another part of the body connection structure provided in the embodiments of the present disclosure; and
Fig. 14 is a schematic structural diagram of a further another part of the body connection structure provided in the embodiments of the present disclosure.

List of reference numerals for main components:
front body 10, front longitudinal beam 11, first mounting hole 111, longitudinal beam vertical face 112, transverse beam 12, reinforcing rib 121, shock tower 13, assembly hole 131, energy-absorbing region 101, energy-absorbing member 1011, load-bearing region 102, upper end beam 14, notch 141, flex point 142, main rib 15, upper surface rib 151, middle rib 152, lower surface rib 153, rib 16, base plate 17, second mounting hole1 171, third mounting hole1 172, vehicle 1000, vehicle body 20, body connection structure 100, front panel 30, A-pillar 40, door sill 50, first fastener 60, second fastener 70, third fastener 80, fourth fastener 90.

### Detailed Description

The following is a detailed description of the embodiments of the present disclosure whose examples are shown in the accompanying drawings. Same or similar reference numerals are used throughout the drawings to indicate same or similar elements or elements having same or similar functions. The embodiments described below with reference to the accompanying drawings are exemplary and are intended only to explain the embodiments of the present disclosure and should not be construed as limiting the present disclosure.

It should be appreciated that, in the description of the present disclosure, orientation or position relations indicated by terms such as "central", "longitudinal", "transverse", "length", "width", "thickness", "upper", "lower", "front", "rear", "left", "right", "vertical", "horizontal", "top", "base", "inner", "outer", "clockwise", "anticlockwise", etc. are orientation or position relations shown in the drawings. Such indication is intended solely for ease of describing the present disclosure and simplifying the description and is not intended to indicate or imply that a device or element in question must be particularly orientated, be configured and operated in a particular orientation, and therefore should not be construed as limiting the present disclosure. Further, terms "first", "second", and the like, are used only for descriptive purposes and should not be construed as indicating or implying relative importance or as implicitly indicating the number of a technical feature in question. Features defined with "first", "second", and the like thus may expressly or implicitly indicate the inclusion of one or more of the features. In the description of the present disclosure, "a plurality of' means "two or more" unless otherwise expressly and specifically defined.

It should be noted that, in the description of the present disclosure, unless otherwise expressly stated and defined, terms "mount", "connected to", and "connected with" should be interpreted in a broad sense and can indicate, for example, a fixed connection, a removable connection, or an integrated connection; or a mechanical connection, an electrical connection, or communication between each other; or a direct connection, or an indirect connection realized via an intermediate medium; or communication between two elements inside or interaction between two elements. Those of ordinary skill in the art may interpret specific meanings of the above terms in the present disclosure depending on specific circumstances.

In the present disclosure, unless otherwise expressly stated and defined, the case where a first feature is "above" or "below" a second feature may include direct contact between the first and second features and may also include indirect contact that is contact between the first and second features via another feature located therebetween. Further, the case where a first feature is "above", "over", or "on" a second feature includes the case where the first feature is directly above or indirectly above the second feature or it simply means that the first feature has a horizontal height greater than that of the second feature. The case where a first feature is "below", "under", or "underneath" a second feature includes the case where the first feature is directly below or indirectly below the second feature or it simply means that the first feature has a horizontal height smaller than that of the second feature.

The following content provides many different embodiments or examples for implementing different structures of the present disclosure. For the conciseness of the present disclosure, components and configurations of specific examples are described below. These components and configurations are of course merely exemplary and are not intended to limit the present disclosure. Further, in the present disclosure, reference numbers and/or reference letters may be repeated in different examples. Such repetition is for the purpose of conciseness and clarity and the repetition in itself does not indicate any relation between various embodiments and/or configurations in question. In addition, the present disclosure provides various examples of specific processes and materials, but those of ordinary skill in the art may be aware of use of other processes and/or other materials.

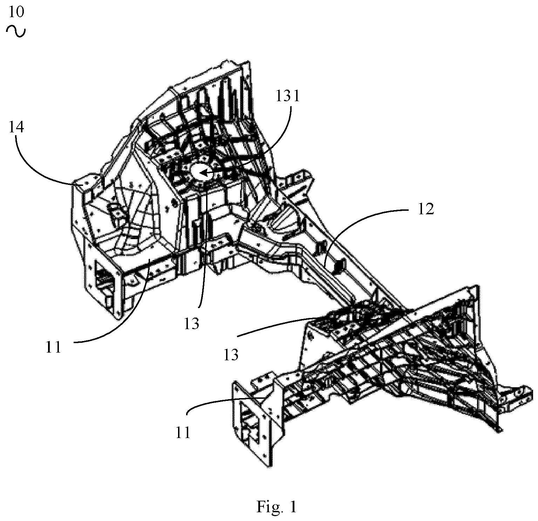

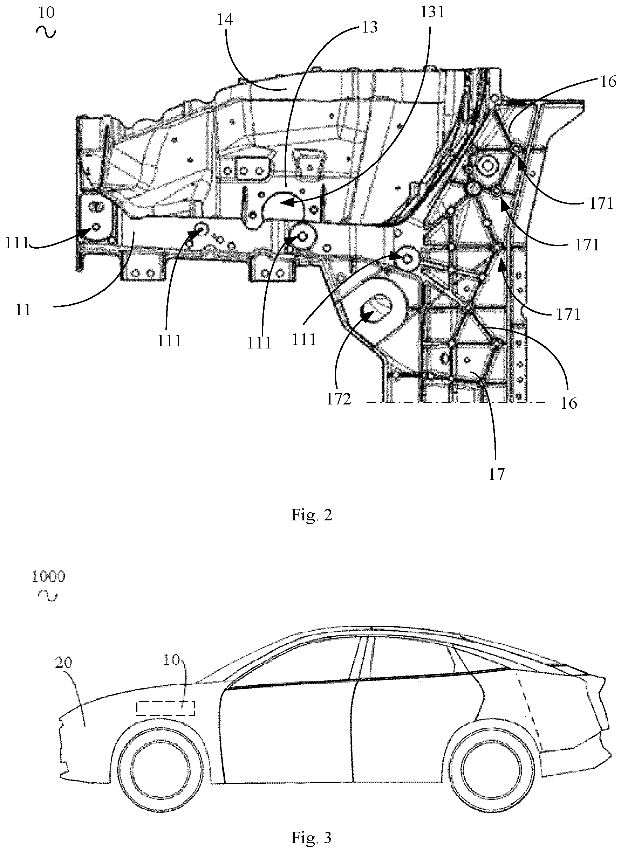

Referring to Figs. 1 and 2, a front body 10 provided in the embodiments of the present disclosure includes a front longitudinal beam 11, a transverse beam 12, a shock tower 13, and an upper end beam 14. The transverse beam 12 is connected with the front longitudinal beam 11. The shock tower 13 is disposed above the front longitudinal beam 11. The upper end beam 14 is connected with the shock tower 13 and the front longitudinal beam 11. The front longitudinal beam 11, the transverse beam 12, the shock tower 13, and the upper end beam 14 are in a one-piece casting structure.

Referring to Figs. 1-3, the front body 10 provided in the embodiments of the present disclosure may be applied to a vehicle 1000. The vehicle 1000 may include the front body 10 and a vehicle body 20. The vehicle body 20 is connected with the front body 10.

In the front body 10, the vehicle 1000, and a body connection structure 100 provided in the embodiments of the present disclosure, the formation of the front body 10 into a one-piece structure by casting enables the front body 10 to be more coherent, as a consequence of which crash forces can be well transferred on the front body 10. Anti-crash performance of the front body 10 is thus improved, and meanwhile intrusion into a front end of the vehicle can be decreased to reduce damage to occupants in the vehicle.

Specifically, provided may be two shock towers 13. The two shock towers 13 are disposed on two front longitudinal beams 11. Each of the shock towers 13 is raised in a direction away from the front longitudinal beam 11 to form a cavity. The upper end beam 14 may be used to mount a front fender of the vehicle 1000 and is located on an outermost side of the front body 10. Provided may be two front longitudinal beams 11. The transverse beam 12 is connected with the two front longitudinal beams 11. The transverse beam 12 and the front longitudinal beams 11 may substantially be in a "]" shape.

It is to be appreciated that the entire front body 10 may be formed by casting into one piece, making it unnecessary to splice and weld a plurality of parts together. This simplifies the manufacturing process of the front body 10 and can also save a lot of investment and man-hours in welding production lines. The front body 10 may be made of a metal material, preferably, an aluminum material. This can help to reduce the weight of the front body 10 and is thus conducive to prolonging of the cruising range of the vehicle 1000. In some embodiments, the front body 10 may also be made of a non-heat-treated aluminum alloy material or other alloy materials.

In addition, the formation of the front body 10 as a one piece casting structure can not only enhance integration of the front body 10, but also is conducive to improvement of overall stiffness as well as noise, vibration, and harshness (NVH) performance of the vehicle 1000. In this way, comfort performance of the vehicle 1000 is improved.

In some embodiments, the vehicle 1000 may further include a front bumper beam and an energy-absorbing box connected with the front bumper beam. The front bumper beam is connected with the front longitudinal beams 11 and is disposed apart from the transverse beam 12. Consequently, when the vehicle 1000 is impacted, a part to be first impacted is the front bumper beam, and the energy-absorbing box can absorb some of impact energy to play a cushioning effect. Forces transferred from the front bumper beam and the energy-absorbing box may be transferred to the transverse beam 12 via the front longitudinal beams 11. Since the front body 10 is formed into a one piece casting structure with no welded joints, the impact forces can be transferred in a more continuous path on the front body 10. This improves the crash performance of the front body 10.

Referring to Figs. 1 and 2, in some embodiments, a first mounting hole 111 is formed in the front longitudinal beams 11. Provided is a plurality of first mounting holes 111. The plurality of first mounting holes 111 is used for mounting a subframe. In this way, the subframe of the vehicle 1000 may be connected with the front body 10 via the first mounting holes 111.

Specifically, the first mounting holes 111 are formed apart from one another on a side of each of the front longitudinal beams 11 away from the shock towers 13. By providing a plurality of mounting holes 111, the subframe is mounted more firmly on the front body 10, which ensures that the subframe is less prone to fall off the front body 10. In some embodiments, the subframe may be connected with the front body 10 via fixing members passing through the first mounting holes 111. The fixing members may be bolts.

Referring to Figs. 1 and 2, in some embodiments, the front body 10 may further include a base plate 17 connected with the front longitudinal beam 11. A second mounting hole 171 is formed on the base plate 17. Provided is a plurality of second mounting holes 171. The plurality of second mounting holes 171 are used for mounting a battery pack. In this way, the battery pack may be mounted on the base plate 17 via the second mounting holes 171.

More specifically, the base plate 17 is disposed on a side of the transverse beam 12 away from the shock towers 13, or to put it another way, the base plate 17 is disposed beneath the transverse beam 12. The base plate 17 may be connected with the transverse beam 12 and the front longitudinal beams 11. It is to be appreciated that the base plate 17, the front longitudinal beams 11, the transverse beam 12, the shock towers 13, and the upper end beam 14 may be formed as a one piece casting structure, such that during a crash, crash forces can be transferred on the front body 10 in a more continuous manner, by way of which the crash performance of the front body 10 can be improved.

The battery pack is a power source of the vehicle 1000. The battery pack may be a ternary lithium battery, a lithium iron phosphate battery, or the like. Specific energy storage materials for the battery pack are not limited herein. In some embodiments, the battery pack may be connected to the front body 10 via fixing members passing through the second mounting holes 171. The fixing members may be bolts.

Referring to Figs. 1 and 2, in some embodiments, a third mounting hole 172 is formed at a junction of the front longitudinal beam 11 and the base plate 17. The third mounting hole 172 is used for mounting a steering column. The third mounting hole 172 thus provides a mounting point for the steering column. The steering column may be connected to the front body 10 via the third mounting hole 172.

Specifically, the third mounting hole 172 is the point for mounting the steering column on the front body 10. The third mounting hole 172 is formed at the junction of the front longitudinal beam 11 and the base plate 17 and on a side away from the shock towers 13 to facilitate connection of the steering column. In some embodiments, the steering column may be connected to the front body 10 via a fixing member passing through the third mounting hole 172. The fixing member may be a bolt.

The steering column can be used to control a travel direction of the vehicle 1000 and transfer torque. A driver can control the steering wheel to transfer torque to a steering gear via the steering column to drive the steering gear to realize turning of the vehicle 1000. The steering gear can also absorb energy produced when the vehicle 1000 is impacted, thereby reducing injury to occupants and improve safety performance of the vehicle 1000. Commonly used steering columns include hydraulic power steering columns, electro-hydraulic power steering columns, and electric power steering columns.

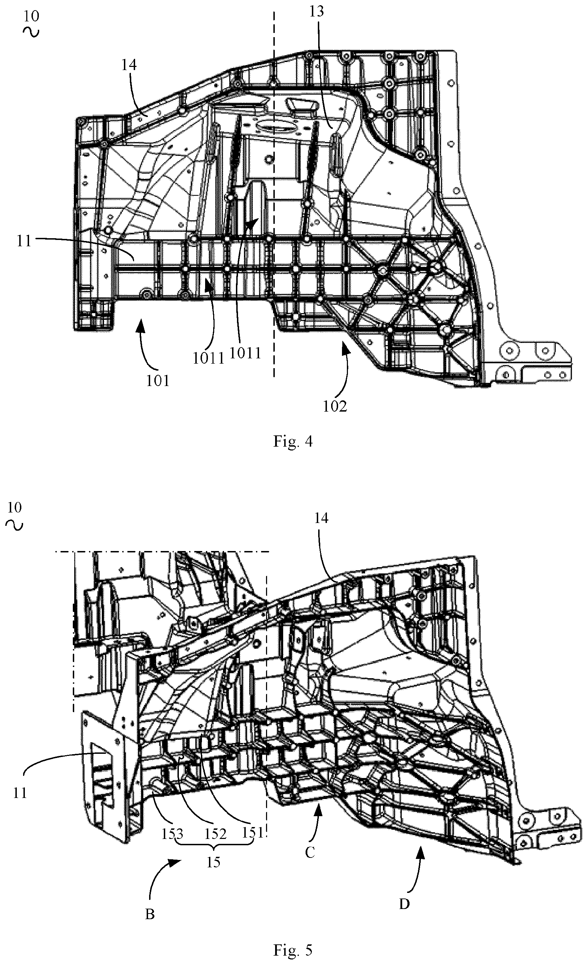

Referring to Fig. 4, in some embodiments, the front body 10 includes an energy-absorbing region 101 and a load-bearing region 102 connected with the energy-absorbing region 101. The energy-absorbing region 101 is provided thereon with an energy-absorbing member(s) 1011.

In this way, the energy-absorbing region 101 can be used to absorb impact energy transferred from the front longitudinal beams 11, and the front body 10 can better collapse and absorb the impact energy at the energy-absorbing member(s) 1011. The load-bearing region 102 may be used to withstand forces transferred from the energy-absorbing region 101, to ensure integrity of a crew compartment of the vehicle 1000.

Specifically, the front body 10 may be constructed to be relatively thin in its material in the energy-absorbing region 101, which is conducive to deformation and collapse of the energy-absorbing region 101 when a crash occurs. The front body 10 may be constructed to be relatively thick in its material in the load-bearing region 102, so that when a crash occurs, the load-bearing region 102 of the front body 10 can withstand forces transferred from the energy-absorbing region 101 without deformation.

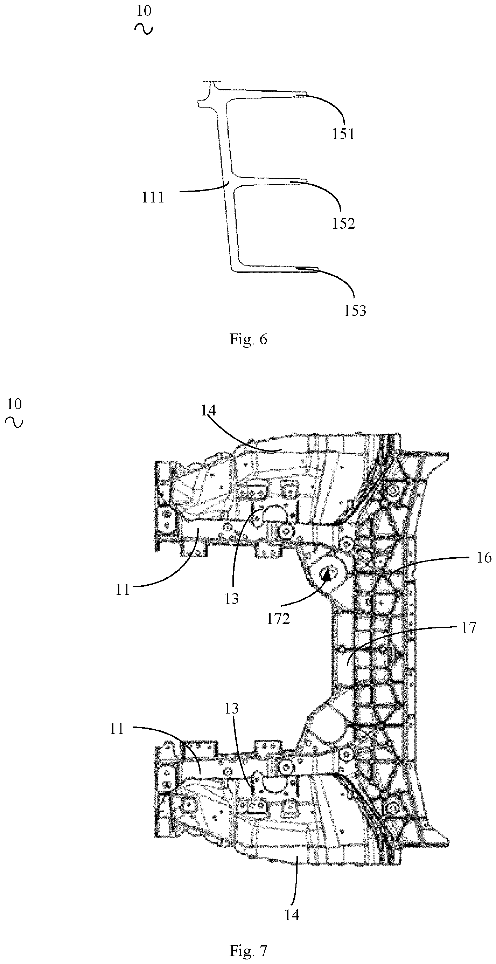

Referring to Figs. 1, 5, and 6, in some embodiments, the front longitudinal beam 11 includes a longitudinal beam vertical face 112. The front body 10 is provided with a main rib 15 in an area where the front longitudinal beam 11 is located. The main rib 15 may include an upper surface rib 151, a middle rib 152, and a lower surface rib 153. The upper surface rib 151, the middle rib 152, and the lower surface rib 153 are disposed apart from one another on the longitudinal beam vertical face 112. The main rib 15 and the longitudinal beam vertical face 112 may substantially be in an "E" shape. The main rib 15 may be made of a metal material. The upper surface rib 151, the middle rib 152, and the lower surface rib 153 extend along the front longitudinal beam 11 from a front end to a rear end of the front longitudinal beam 11. The front end of the front longitudinal beam 11 is the end away from the transverse beam 12, and the rear end of the front longitudinal beam 11 is the end connected to the transverse beam 12.

The longitudinal beam vertical face 112 may have, along a direction perpendicular to the raised direction of the shock tower 13, a wall thickness of 4 mm in a first region B, 5 mm in a second region C, and 6 mm in a third region D. The first region B may correspond to the energy-absorbing region 101 of the front body 10, and the second region C and the third region D may correspond to the load-bearing region 102 of the front body 10.

Since the front body 10 has different functions in the energy-absorbing region 101 and the load-bearing region 102, the main rib 15 may have, along the raised direction of the shock tower 13, a thickness of 3-4 mm in the energy-absorbing region 101, and a thickness of 5-6 mm in the load-bearing region 102. Thus, the main rib 15 has the thickness in the load-bearing region 102 that is greater than the thickness in the energy-absorbing region 101. When a crash occurs, this is conducive to deformation and collapse of the main rib 15 in the energy-absorbing region 101, while the main rib 15 in the load-bearing region 102 can withstand forces transferred from the energy-absorbing region 101 without deformation.

Referring to Fig. 1, in some embodiments, the shock tower 13 has an assembly hole 131 formed on an end thereof away from the front longitudinal beam 11. The assembly hole 131 is used for mounting a shock absorber. The shock absorber may be mounted in the shock tower 13 via the assembly hole 131, improving mounting reliability and stability of the front shock absorber.

Specifically, when the vehicle 1000 travels on an uneven road, the shock absorber may damp vibrations to suppress impacts from a road surface. The shock absorber is capable of quickly attenuating the vibrations, thereby improving ride comfort performance of the vehicle 1000. Shock absorbers may include hydraulic shock absorbers, inflatable shock absorbers, and variable damping shock absorbers. The shock absorber is mounted in the shock tower 13 via the assembly hole 131, and the shock tower 13 may cover a part of the shock absorber to play a protective effect.

Referring to Figs. 1 and 2, in some embodiments, the front body 10 may be provided with the first mounting holes 111 for mounting the subframe, the second mounting holes 171 for mounting the battery pack, the third mounting hole 172 for mounting the steering column, and the assembly hole 131 for mounting the shock absorber. The mounting points of the subframe, the battery pack, the steering column, and the shock absorber are all integrated on the front body 10, which realizes a high degree of integration. Stiffness and strength at the mounting points may be realized by locally providing fixing ribs and various material thicknesses of profiles.

In an example, the strength at the mounting point of the steering column may be enhanced by increasing a thickness at the junction of the front longitudinal beam 11 and the base plate 17.

In another example, a plurality of second mounting holes 171 are provided on a side of the base plate 17 away from the shock tower 13, and a plurality of fixing ribs are provided on the side of the base plate 17 away from the shock tower 13, the fixing ribs each being connectable to two second mounting holes 171 adjacent thereto. In this way, the stiffness at the mounting point of the battery pack is increased.

Referring to Figs. 1, 2, and 7, in some embodiments, the front body 10 includes ribs 16. The ribs 16 are interlaced on the base plate 17. In this way, the base plate 17 may transfer forces transferred from the front longitudinal beams 11 via the ribs 16, as a consequence of which the forces are transferred in a more continuous path on the front body 10. The crash performance of the front body 10 is thus improved.

It is to be appreciated that the ribs 16, the front longitudinal beams 11, the transverse beam 12, the shock towers 13, and the upper end beam 14 are in a one-piece casting structure. In some embodiments, the plurality of first mounting holes 111 may be disposed apart from one another on the side of the front longitudinal beams 11 away from the shock tower 13. The base plate 17 is connected with the front longitudinal beams 11. Some of the ribs 16 may also be disposed on the side of the front longitudinal beams 11 away from the shock tower 12. Some of the ribs 16 may be connected with the first mounting holes 111 on the front longitudinal beams 11, and the stiffness at the first mounting holes 111 may be enhanced by increasing a thickness of the ribs 16 connected with the first mounting holes 111.

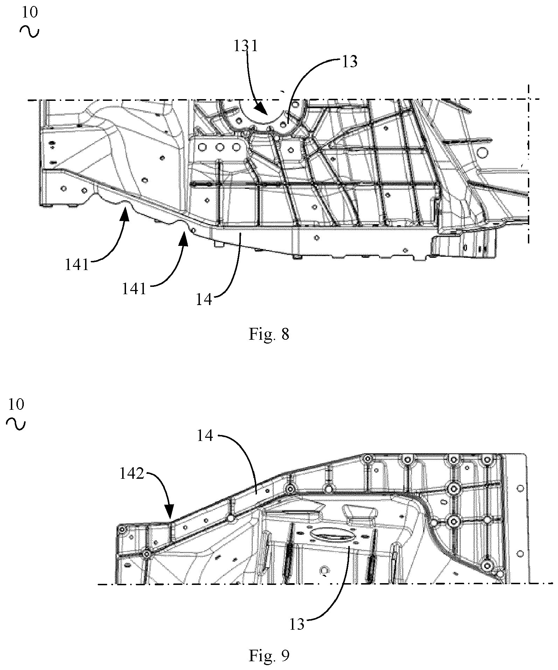

Referring to Figs. 1 and 8, in some embodiments, the upper end beam 14 has a notch(es) 141 formed at an edge thereof away from the front longitudinal beam 11. The notch(es) 141 may enable the front body 10 to flex to absorb energy during a crash. The energy absorption by the upper end beam 14 can reduce intrusion into the front end of the vehicle, thereby reducing injury to occupants.

Specifically, the upper end beam 14 may also be provided with a flex point 142 at the edge thereof away from the longitudinal beam. The flex point 142 may cause flexing to realize energy absorption during a crash, so that the upper end beam 14 can absorb some of the impact energy to reduce intrusion into the front end of the vehicle, thereby protecting the crew compartment of the vehicle 1000 from deformation and intrusion to reduce injury to occupants.

Referring to Figs. 4, 8, and 9, in some embodiments, the front body 10 includes an energy-absorbing region 101 and a load-bearing region 102 connected with the energy-absorbing region 101. The energy-absorbing region 101 is provided thereon with an energy-absorbing member(s) 1011. The upper end beam 14 has, along the raised direction of the shock tower 13, a thickness of 2.5 mm in the energy-absorbing region 101, and a thickness of more than 4 mm in the load-bearing region 102. Thus, the thickness of the upper end beam 14 in the load-bearing region 102 is greater than its thickness in the energy-absorbing region 101. This, when a crash occurs, is conducive to deformation and collapse of the upper end beam 14 in the energy-absorbing region 101, while the upper end beam 14 in the load-bearing region 102 can withstand forces transferred from the energy-absorbing region 101 without deformation.

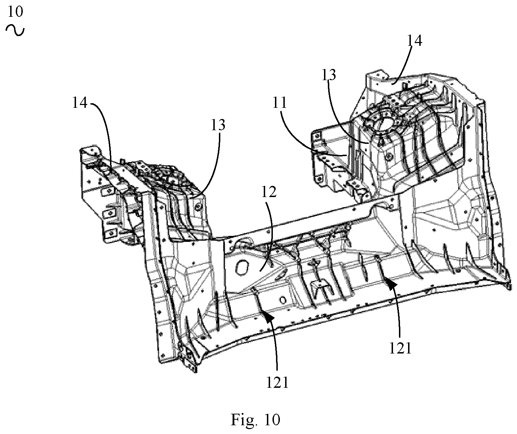

Referring to Figs. 1 and 10, in some embodiments, the transverse beam 12 is provided with a reinforcing rib(s) 121. The reinforcing rib(s) 121 can increase the stiffness of the transverse beam 12 to reduce deformation of the transverse beam 12.

Specifically, the reinforcing rib(s) 121 may play a role in supporting the transverse beam 12 to reduce deformation of the transverse beam 12 when impacted so as to ensure safety of occupants. In some embodiments, it may also be possible to increase the strength of the transverse beam 12 by increasing a thickness of the transverse beam 12, so as to avoid deformation of the transverse beam 12 when impacted. Provided may be a plurality of reinforcing ribs 121. The reinforcing ribs 121 are disposed apart from one another on the transverse beam 12.

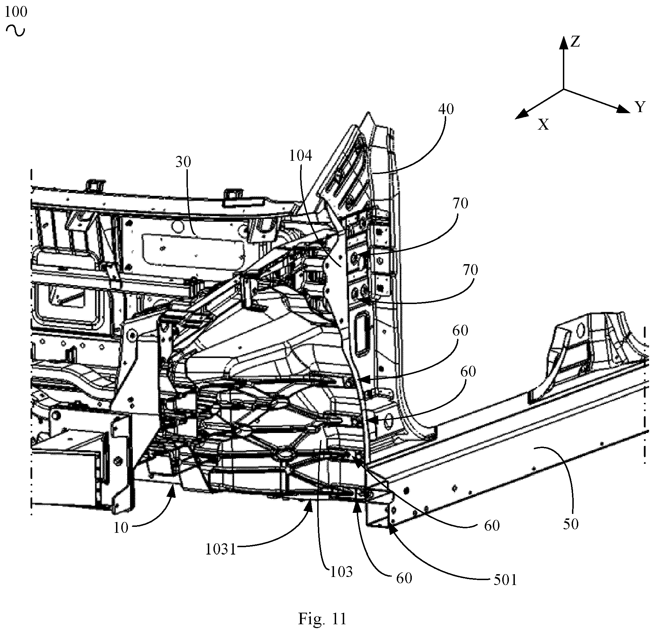

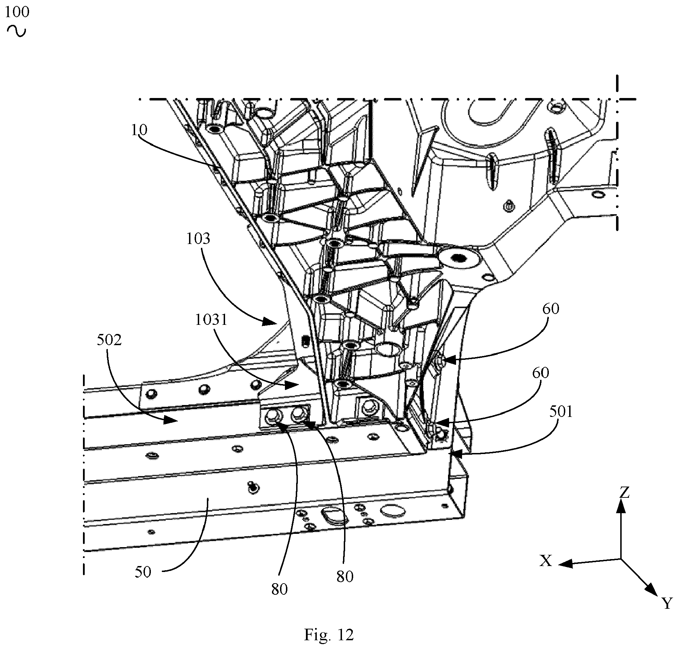

Referring to Figs. 11 and 12, the body connection structure 100 provided in the embodiments of the present disclosure is used for the vehicle 1000. The body connection structure 100 includes a front body 10, an A-pillar 40, and a door sill 50. The front body 10 is a one-piece casting structure. The A-pillar 40 is connected to a lower portion 103 of the front body 10 via a first fastener(s) 60. An axis direction of the first fastener(s) 60 extends along a length direction X of the vehicle 1000. The door sill 50 is connected to the lower portion 103 of the front engine bay, and an end portion 501 of the door sill 50 is arranged to overlap the lower portion 103 of the front body 10 along a width direction Y of the vehicle 1000.

Because the front body 10 is a one-piece casting structure, in the event of an impact, impact forces can be transferred on the front body 10 in a more continuous manner. The front body 10 may thus dispersedly transfer the impact forces to the A-pillar 40 and the door sill 50, thereby realizing impact energy absorption by other parts of the body connection structure 100, and improving body stiffness and NVH performance of the vehicle. Moreover, the A-pillar 40 is connected to the lower portion 103 of the front body 10 via the first fastener(s) 60, and the end portion 501 of the door sill 50 is arranged to overlap the lower portion 103 of the front body 10 along the width direction Y of the vehicle 1000, such an arrangement can enhance strength of connections of the front body 10 with the A-pillar 40 and the door sill 50, thus avoiding disconnection of the A-pillar 40 and the door sill 50 from the lower portion 103 of the front body 10 in certain conditions.

Specifically, the A-pillar 40 is a connection pillar 40 between a roof of the vehicle 1000 and the front body 10. Both the A-pillar 40 and the door sill 50 may be made of a metal material.

When the A-pillar 40 is made of steel and the front body 10 is made of an aluminum material, the A-pillar 40 and the door sill 50 may be removably connected to the lower portion 103 of the front body 10 via the first fastener(s) 60 for welding cannot be used between aluminum and steel. The first fastener(s) 60 may be a bolt(s). Connections via bolts have a strong strength, and therefore when a severe crash occurs, the A-pillar 40 is not prone to damage and falling off the front body 10. In addition, bolt connection is convenient for later disassembly and maintenance.

Provided may be one, two, three or four first fasteners 60, which is not limited herein. The number of the first fasteners 60 may be determined depending on actual needs.

In an example, the A-pillar 40 may be connected to the lower portion 103 of the front body 10 via four first fasteners 60. The four first fasteners 60 are provided apart from one another on the lower portion 103 of the front body 10 along a height direction Z of the vehicle 1000. Axes of the four first fasteners 60 all extend along the length direction X of the vehicle 1000. The connection of the A-pillar 40 to the front body 10 via the four first fasteners 60 can produce a fastened connection between the A-pillar 40 and the lower portion 103 of the front body 10 along the length direction X of the vehicle 1000. In this way, when a severe crash occurs, the A-pillar 40 is not prone to damage and falling off the lower portion 103 of the front body 10.

Referring to Figs. 11 and 12, in some embodiments, the end portion 501 of the door sill 50 is arranged to overlap the lower portion 103 of the front engine bay 10 structure along the length direction X of the vehicle 1000, which can enhance the strength of the connection between the front body 10 and the door sill 50 to avoid the situation that the door sill 50 is disconnected from the front body 10 and then fall off.

Referring to Figs. 11 and 12, in some embodiments, the lower portion 103 of the front body 10 wraps at least a part of the end portion 501 of the door sill 50. This can increase the strength of the connection between the front body 10 and the door sill 50, to ensure that the door sill 50 will not be disconnected from and fall off the front body 10 in the event of a severe crash. Reliability of the body connection structure 100 is thus improved.

Referring to Figs. 11 and 12, in some embodiments, the A-pillar 40 is connected to an upper portion 104 of the front body 10 via a second fastener(s) 70. An axis of the second fastener(s) 70 extends along the width direction Y of the vehicle 1000. In this way, a fastened connection of the A-pillar 40 to the upper portion 104 of the front body 10 is realized along the width direction Y of the vehicle 1000, preventing the A-pillar 40 from coming loose and even falling off the upper portion 104 of the front body 10.

When the A-pillar 40 is made of steel and the front body 10 is made of an aluminum material, the A-pillar 40 may be removably connected to the upper portion 104 of the front body 10 via the second fastener(s) 70 for welding cannot be used between aluminum and steel. The second fastener(s) 70 may be a bolt(s). Connections vis bolts have a large strength, and therefore when a severe crash occurs, the A-pillar 40 is not prone to damage and falling off the upper portion 104 of the front body 10. In addition, the bolt connection is convenient for later disassembly and maintenance. Provided may be one, two, three or four second fasteners 70, which is not limited herein. The number of the second fasteners 70 may be determined depending on actual needs.

In an example, the A-pillar 40 may be connected to the upper portion 104 of the front body 10 via two second fasteners 70. The two second fasteners 70 may be provided apart from each other on the upper portion 104 of the front body 10 along the height direction Z of the vehicle 1000. Axes of the two second fasteners 70 both extend along the width direction Y of the vehicle 1000. The connection of the A-pillar 40 to the upper portion 104 of the front body 10 via the two second fasteners 70 can produce a fastened connection between the A-pillar 40 and the upper portion 104 of the front body 10 along the width direction Y of the vehicle 1000. When a severe crash occurs, the A-pillar 40 is not prone to fall off the upper portion 104 of the front body 10.

Referring to Fig. 12, in some embodiments, a root portion 1031 of the front body 10 is connected with an inner side 502 of the door sill 50 via a third fastener(s) 80. The lower portion 103 of the front body 10 may include the root portion 1031 of the front body 10. Thus, the root portion 1031 of the front body 10 can be connected with the inner side 502 of the door sill 50 via the third fastener(s) 80 to increase the strength of the connection between the inner side of the door sill 50 and the root portion 1031 of the front body 10.

When the door sill 50 is made of steel and the front body 10 is made of an aluminum material, the door sill 50 may be removably connected to the root portion 1031 of the front body 10 via the third fastener(s) 80 for welding cannot be used between aluminum and steel. The third fastener(s) 80 may be a bolt(s). Connection via bolts have a large strength, and therefore when a severe crash occurs, the door sill 50 is not prone to damage and falling off the root portion 1031 of the front body 10. In addition, the bolt connection is convenient for later disassembly and maintenance. Provided may be one, two, three or four third fasteners 80, which is not limited herein. The number of the third fasteners 80 may be determined depending on actual needs.

In an example, the inner side 502 of the door sill 50 may be connected to the root portion 1031 of the front body 10 via two third fasteners 80. The two third fasteners 80 are provided apart from each other on the root portion 1031 of the front body 10 along the length direction X of the vehicle 1000. Axes of the two third fasteners 80 extend along the width direction Y of the vehicle 1000. The connection of the inner side 502 of the door sill 50 to the root portion 1031 of the front body 10 via the two third fasteners 80 can produce a fastened connection between the inner side 502 of the door sill 50 and the root portion 1031 of the front body 10 along the width direction Y of the vehicle 1000. In this way, when a severe crash occurs, the door sill 50 is not prone to falling off the root portion 1031 of the front body 10.

Referring to Fig. 11, in some embodiments, the A-pillar 40 and the root portion 1031 of the front body 10 are connected via the first fasteners 60, and the lower portion 103 of the front body 10 may include the root portion 1031 of the front body 10. Thus, a fastened connection is realized between the A-pillar 40 and the root portion 1031 of the front body 10 via the first fasteners 60, avoiding disconnection of the A-pillar 40 from the root portion 1031 of the front body 10.

Specifically, the first fasteners 60 may be bolts. The first fasteners 60 may be provided on the root portion 1031 of the front body 10. An axis of the first fasteners 60 extend along the length direction X of the vehicle 1000. The first fasteners 60 connect the A-pillar 40 to the root portion 1031 of the front body 10 to ensure the strength of the connection between the A-pillar 40 and the root portion 1031 of the front body 10.

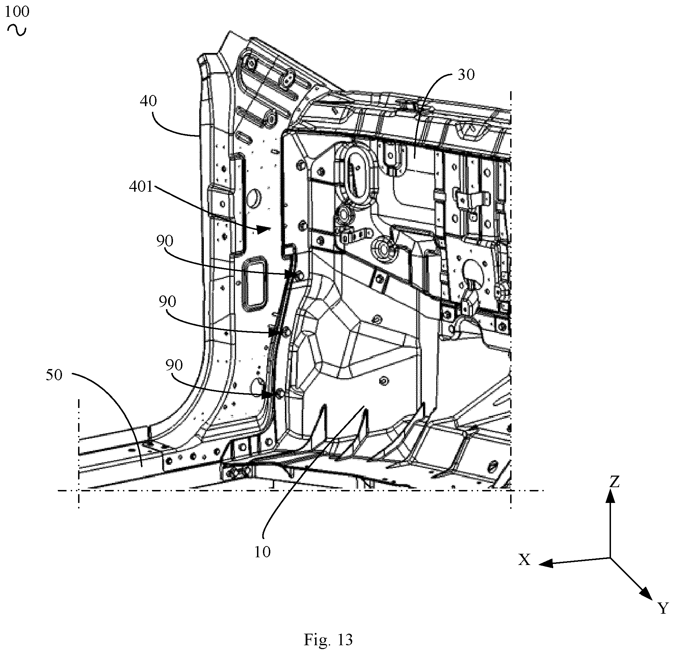

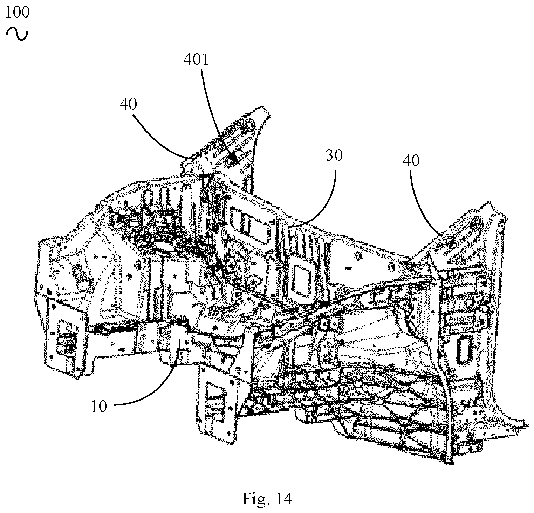

Referring to Figs. 13 and 14, in some embodiments, provided are two A-pillars 40. Each A-pillar 40 faces an inner side of the other A-pillar 40. The front body 10 is sandwiched between the two A-pillars 40. Sandwiching the front body 10 between the inner sides 401 of the two A-pillars 40 can reduce risks that the front body 10 breaks and falls off during a crash.

Referring to Figs. 13 and 14, in some embodiments, the front body 10 is connected with the inner sides 401 of the A-pillars 40 via fourth fasteners 90. An axis of the fourth fasteners 90 extends along the width direction Y of the vehicle 1000. In this way, a fastened connection can be realized between the inner sides 401 of the A-pillars 40 and the front body 10 along the width direction Y of the vehicle 1000 via the fourth fasteners 90.

When the A-pillar 40 is made of steel and the front body 10 is made of an aluminum material, the inner side 401 of the A-pillar pillar 40 may be removably connected to the front body 10 via a fourth fastener(s) 90 for welding cannot be used between aluminum and steel. The fourth fastener(s) 90 may be a bolt(s). Connections via bolts have a large strength, and therefore when a severe crash occurs, the inner side of the A-pillar 40 is not prone to fall off the front body 10. Besides, the bolt connection is convenient for later disassembly and maintenance. Provided may be one, two, three, or four fourth fasteners 90, which is no limit herein.

In an example, the inner side 401 of the A-pillar 40 may be connected to the upper portion 104 of the front body 10 via three fourth fasteners 90. The three fourth fasteners 90 are disposed apart from one another on the front body 10 along the height direction Z of the vehicle 1000. Axes of the three fourth fasteners 90 all extend along the width direction Y of the vehicle 1000. The connection of the inner side 401 of the A-pillar 40 to the front body 10 via the three fourth fasteners 90 can produce a fastened connection between the inner side 401 of the A-pillar 40 and the upper portion 104 of the front body 10 along the width direction Y of the vehicle 1000. When a severe crash occurs, the inner side 401 of the A-pillar 40 is not prone to fall off the front body 10.

In some embodiments, the body connection structure 100 may further include a front panel 30. The front panel 30 may be removably connected to the front body 10 via a fixing member(s). In an example, the front panel 30 may be connected to the front body 10 via a bolt(s). The strength of the bolt connection is large, and therefore when a large crash occurs, the front panel 30 is not prone to damage. The bolt connection is also conducive to later disassembly and maintenance.

In some embodiments, it is also possible to connect the front panel 30, the A-pillars 40, and the door sill 50 to the front body 10 by self-piercing riveting or flow drill screws, which is not limited herein. In some embodiments, the A-pillars 40 and the door sill 50 may be in a one-piece structure.

In some embodiments, the body connection structure 100 may include a front bumper beam, an energy-absorbing box, the A-pillars 40, and the door sill 50. The front bumper beam is connected to the energy-absorbing box. The front bumper beam is connected to the front longitudinal beams 11 and is spaced apart from the transverse beam 12. The A-pillar 40 is connected with the door sill 50 and the front body 10. When the vehicle 1000 is impacted, the front bumper beam is first affected by impact forces, in which case the energy-absorbing box can absorb some of energy of the impact forces to play a cushioning effect. The forces transferred from the front bumper beam and the energy-absorbing box can be transferred to the transverse beam 12 via the front longitudinal beams 11, and then the transverse beam 12 can transfer the impact forces to the door sill 50. At the same time, the forces transferred from the front bumper beam and the energy-absorbing box can also be transferred to the A-pillars 40 via the upper end beam 14. In this way, the impact energy can be absorbed by other parts of the body connection structure 100, which improves body stiffness, NVH performance, and thus comfort performance of the vehicle 1000.

In the description of this specification, description with reference to "an embodiment", "some embodiments", "exemplary embodiment", "example", "specific example" or "some examples" is intended to mean that specific features, structures, materials or characteristics described with reference to an embodiment or example are included in at least one embodiment or example of the present disclosure. In this specification, exemplary representation of the above terms does not necessarily refer to a same embodiment or example. Moreover, the specific features, structures, materials, or characteristics described may be combined in a suitable manner in any one or more embodiments or examples.

Although the embodiments of the present disclosure have been shown and described above, those of ordinary skill in the art will appreciate that, without departing from the principles and spirits of the present disclosure, changes, modifications, substitutions, and variations can be made to these embodiments. The scope of the present disclosure is defined by the claims and equivalents thereof.

## Claims

1. A front body for a vehicle, comprising:
a front longitudinal beam;
a transverse beam, connected with the front longitudinal beam;
a shock tower, disposed above the front longitudinal beam; and
an upper end beam, connected with the shock tower and the front longitudinal beam,
wherein the front longitudinal beam, the transverse beam, the shock tower, and the upper end beam are in a one-piece casting structure.

2. The front body according to claim 1, wherein the front longitudinal beam has a plurality of first mounting holes formed therein for mounting a subframe.

3. The front body according to claim 1, further comprising a base plate connected with the front longitudinal beam, wherein the base plate has a plurality of second mounting holes formed therein for mounting a battery pack.

4. The front body according to claim 3, wherein a third mounting hole is formed at a junction of the front longitudinal beam and the base plate, the third mounting hole being used for mounting a steering column.

5. The front body according to claim 3, further comprising a plurality of ribs, the ribs being interlaced on the base plate.

6. The front body according to claim 1, further comprising an energy-absorbing region and a load-bearing region connected with the energy-absorbing region, wherein the energy-absorbing region is provided with an energy-absorbing member.

7. The front body according to claim 1, wherein:
the shock tower has an assembly hole formed at a side away from the front longitudinal beam, the assembly hole being used for mounting a shock absorber;
the upper end beam has a notch formed at an edge away from the front longitudinal beam; or
the transverse beam is provided thereon with a reinforcing rib.

8. A vehicle, comprising:
a front body according to any one of claims 1 to 7; and
a vehicle body, connected with the front body.

9. A body connection structure for a vehicle, comprising:
a front body, formed by casting as a one-piece structure;
an A-pillar, connected with a lower portion of the front body via a first fastener, wherein an axis direction of the first fastener extends along a length direction of the vehicle; and
a door sill, connected with the lower portion of the front body, wherein an end portion of the door sill is arranged to overlap the lower portion of the front body along a width direction of the vehicle.

10. The body connection structure according to claim 9, wherein the lower portion of the front body wraps at least a part of the end portion of the door sill.

11. The body connection structure according to claim 9, wherein the A-pillar is connected with an upper portion of the front body via a second fastener, wherein an axis of the second fastener extends along the width direction of the vehicle.

12. The body connection structure according to claim 9, wherein a root portion of the front body is connected with an inner side of the door sill via a third fastener, wherein the lower portion of the front body comprises the root portion of the front body.

13. The body connection structure according to claim 9, wherein the A-pillar and a root portion of the front body are connected via the first fastener, and the lower portion of the front body comprises the root portion of the front body.

14. The body connection structure according to claim 9, wherein provided are two A-pillars, each of the A-pillars facing an inner side of the other A-pillar, and wherein the front body is sandwiched between the two A-pillars.

15. The body connection structure according to claim 14, wherein the front body is connected with the inner sides of the A-pillars via fourth fasteners, an axis of the fourth fastener extending along the width direction of the vehicle.
